# EUROPEAN PATENT APPLICATION

(11) **EP 1 068 911 A2**
(43) Date of publication of application: **17.01.2001**
(21) Application number: 00305160.4
(22) Date of filing: 19.06.2000
(51) Int. Cl.: B21J 15/12, B21J 15/16, B23Q 5/22, B23Q 1/62

(54) **Multi-axis system and method for applying fastening means**

(30) Priority: 23.06.1999 US 338882
(71) Applicant: Northrop Grumman Corporation, Los Angeles, California 90069 (US)
(72) Inventor: Turner, Mark A., Texas 76013 (US); Ferenczi, Laszlo, Texas 75062 (US); Guenther, Gary, Texas 75060 (US); Pekar, Gary W., Texas 76063 (US)
(74) Representative: Lomas, Geoffrey Michael

(57) **Abstract**

A multi-axis fastening system (10) for installing a fastener in a workpiece includes a fastener installation device (12) movable along a first axis (26) and operable to install the fastener in the workpiece. The system (10) also includes a table (16) having a longitudinal axis (60) substantially orthogonal to the first axis (26) and operable to move along a second axis (44,48) substantially orthogonal to the first axis (26) and the longitudinal axis (60). The system (10) further includes a carriage (14) mounted on the table (16) and operable to support and move the workpiece along the longitudinal axis (60).

## Description

### TECHNICAL FIELD OF INVENTION

The present invention relates generally to the field of fastener installation and, more particularly, to a multi-axis fastening system and method.

### BACKGROUND OF THE INVENTION

Multi-axis fastening systems are generally used to perform various manufacturing operations on a workpiece, such as drilling and installing fasteners. For example, the workpiece may include a wing skin for an aircraft and stringers to be attached to the wing skin. The wing skin and stringers may be placed between a pair of heads of a fastener installation device. The fastener installation device may be used to automatically drill a hole through the wing skin and stringer, insert a rivet into the hole, and deform both heads of the rivet as part of a single operation.

One example of a multi-axis fastening system is illustrated in U.S. Patent No. 4,966,323 issued to Speller, Sr., et al., and includes a fixture for securing a workpiece adjacent a fastener installation device. The fastener installation device is moveable along a longitudinal direction relative to the workpiece for drilling and installing fasteners along the length of the workpiece. The fastener installation device is also movable in a direction perpendicular to the longitudinal direction for installing fasteners across the width of the workpiece. The head of the fastener installation device is movable about an axis substantially parallel to the longitudinal direction of the workpiece to obtain normality of the workpiece relative to the fastener head.

Known multi-axis fastening systems present certain drawbacks. For example, fastener installation devices generally weigh in excess of 75,000 pounds. Accelerating and decelerating the fastener installation device from one fastener location to another may be difficult, imprecise, and time consuming. For example, fastener spacing in the workpiece may require locating the fastener installation device relative to the workpiece to within several thousandths of an inch.

Additionally, known multi-axis fastening systems generally require manual intervention to ensure proper fastener locating. For example, an operator may be required to visibly locate paint or spray dots on the workpiece indicating a required fastener location. The operator may then control positioning the workpiece relative to the fastener installation device, or the fastener installation device relative to the workpiece, to maintain proper fastener locations.

Accordingly, a need has arisen for an improved multi-axis fastening system and method. The present invention stems from some work aimed at providing a multi-axis fastening system and method that addresses some shortcomings of prior systems and methods.

### SUMMARIES OF THE INVENTION

According to one aspect of the present invention, we provide a multi-axis fastening system for installing a fastener in a workpiece comprising: a fastener installation device movable along a first axis and operable to install the fastener in the workpiece; a table having a longitudinal axis substantially orthogonal to the first axis and operable to move along a second axis substantially orthogonal to the first and longitudinal axes; and a carriage mounted on the table and operable to support and move the workpiece along the longitudinal axis.

The fastener installation device preferably is further operable to rotate about the first axis.

The system preferably further comprises a processor operable to control movement of the fastener installation device along the first axis to install the fastener at a predetermined location in the workpiece.

The table is preferably further operable to rotate about the longitudinal axis.

The system preferably further comprises a processor operable to control rotation of the table about the longitudinal axis to normalise the workpiece relative to the fastener installation device, and at least one sensor is preferably operable to determine normality of the workpiece relative to the fastener installation device, and the sensor may comprise at least one proximity sensor.

The system preferably further comprises at least one sensor operable to determine a distance from an edge of the workpiece to locate a site for the fastener, and said distance determining sensor preferably comprises an optical sensor.

A fastener delivery system is preferably provided and is operable to transfer the fastener from a storage device to the fastener installation device.

The table preferably comprises: a support operable to support a first location of the workpiece; a sensor operable to determine a location of the support relative to the fastener installation device; and a processor operable to receive a signal from said support sensor and automatically move the support to support a second location of the workpiece.

A workpiece loading system is preferably provided and is operable to load the workpiece onto the carriage, the workpiece loading system preferably comprising at least one support operable to rotate upwardly to receive the workpiece and rotate downwardly to load the workpiece onto the carriage.

The carriage preferably comprises: at least one support operable to support the workpiece; at least one clamp operable to secure the workpiece; and a drive unit coupled to the support and the clamp, the drive unit operable to move the support, the clamp and the workpiece along the longitudinal axis.

According to a second aspect of the present invention we provide a method for installing a fastener in a workpiece comprising: providing a fastener installation device movable along a first axis; providing a table having a longitudinal axis substantially orthogonal to the first axis; moving the table in a vertical axis substantially orthogonal to the first and longitudinal axes; locating the workpiece on a carriage; and moving the carriage on the table along the longitudinal axis.

The method preferably further comprises rotating the fastener installation device about the first axis.

The method preferably further comprises rotating the table about the longitudinal axis.

The method preferably further comprises automatically determining a distance from an edge of the workpiece to locate a site for the fastener.

The method preferably further comprises automatically determining normality of the workpiece relative to the fastener installation device.

The step of providing a table preferably comprises: providing a support operable to support the workpiece at a first location; providing a sensor operable to determine a location of the workpiece relative to the fastener installation device; and the method preferably further comprises receiving a signal from the sensor and automatically moving the support to support the workpiece at a second location of the workpiece.

Preferably the fastener is automatically transported from a storage device to the fastener installation device.

According to a third aspect of the invention we provide a multi-axis fastening system for installing a fastener in a workpiece comprising: a fastener installation device; a carriage operable to position the workpiece adjacent the fastener installation device; a table operable to support the carriage and position the workpiece adjacent the fastener installation device; a control system operable to control movement of the table, the carriage, and the fastener installation device; and wherein the fastener installation device, the carriage, the table, or the workpiece having a least amount of weight experiences a majority of the movement.

Thus, movement of the high-mass fastener installation device is minimised, thereby decreasing the time required to install fasteners in the workpiece.

The control system is preferably further operable to control movement of the fastener installation device to maintain a predetermined distance to an edge of the workpiece for the fastener.

The control system is preferably further operable to control movement of the fastener installation device and the table to normalise the workpiece relative to the fastener installation device.

The carriage preferably then comprises: a support operable to support a first location of the workpiece; a sensor operable to determine a distance from the support to the fastener installation device; and the control system is further operable to receive a signal from the sensor and move the support to a second location of the workpiece.

According to a fourth aspect of the invention we provide a carriage for transporting a workpiece along a longitudinal axis adjacent a fastener installation device, the carriage comprising: a support to support the workpiece; a clamp unit operable to secure the workpiece adjacent the support; and a drive unit coupled to the support and the clamp unit, the drive unit being operable to move the support, the clamp unit and the workpiece along the longitudinal axis.

The clamp unit is preferably further operable to rotate about the longitudinal axis to receive the workpiece, and the clamp unit preferably comprises a plurality of clamps, each clamp operable to move independently along an axis substantially orthogonal to the longitudinal axis.

The carriage preferably further comprises: a sensor operable to determine a distance from the support to the fastener installation device; and a processor operable to receive a signal from the sensor and move the support to another location on the workpiece away from the fastener installation device.

The support preferably comprises a roller operable to translate from a first location of the workpiece to a second location of the workpiece while supporting the workpiece.

According to a fifth aspect of the invention we provide a loading system for loading a workpiece in a fastener installation system comprising: a support operable to receive the workpiece; a drive unit operable to rotate the support from a first position to a second position to receive the workpiece; and a clamp unit operable to secure the workpiece in the second position.

The clamp unit is preferably further operable to rotate about a longitudinal axis from a third position to a fourth position to receive and secure the workpiece.

The clamp unit preferably comprises a plurality of clamps, each clamp operable to independently move along an axis substantially orthogonal to the longitudinal axis.

The drive unit is preferably further operable to rotate the support from the second position to the first position to deliver the workpiece to a table.

Technical advantages of the present invention include greater efficiency than prior systems and methods.

According to another preferred feature of the present invention, the multi-axis fastening system may also include a positioning system to automatically maintain predetermined fastener location requirements. For example, the positioning system may automatically position the workpiece adjacent the fastener installation device to maintain a fastener-to-fastener spacing requirement. Additionally the positioning system may automatically adjust the position of the fastener installation device to maintain an edge distance requirement for the fastener. Further, the positioning system may automatically provide normalisation between the workpiece and the fastener installation device.

### BRIEF DESCRIPTION OF THE DRAWINGS

The invention will now be further described, by way of example only, with reference to the accompanying drawings in which:
**Figure 1** is a schematic diagram of a multi-axis fastening system in accordance with the present invention;
**Figure 2** is a schematic diagram of a portion of the multi-axis fastening system illustrated in Figure 1;
**Figure 3** is a schematic diagram of a workpiece receiving fasteners from a multi-axis fastening system in accordance with an embodiment of the present invention;
**Figure 4A** is a schematic diagram of a carriage support for a multi-axis fastening system in accordance with an embodiment of the present invention;
**Figure 4B** is a schematic diagram of the carriage support illustrated in Figure 4A after movement of the carriage support to a second supporting position;
**Figure 5** is a block diagram of a control system for the multi-axis fastening system illustrated in Figure 1 in accordance with an embodiment of the present invention;

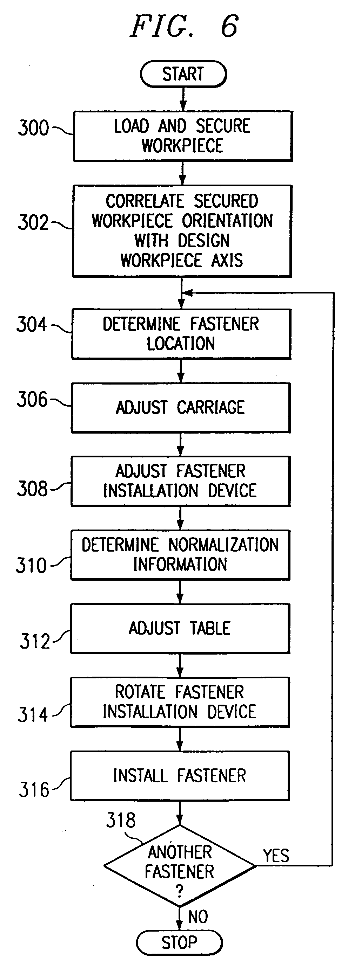

**Figure 6** is a method for multi-axis fastening in accordance with an embodiment of the present invention;
**Figure 7** is a method for loading a workpiece into a multi-axis fastening system in accordance with an embodiment of the present invention; and
**Figure 8** is a method for automatic support adjustment in a multi-axis fastening system in accordance with an embodiment of the present invention.

### DETAILED DESCRIPTION OF THE PREFERRED EMBODIMENTS

Among other things, the present invention provides a method for efficient multi-axis fastener installation. For example, a carriage moves a workpiece along a longitudinal axis adjacent a fastener installation device. A table is operable to raise or lower the carriage about a first axis substantially orthogonal to the longitudinal axis. The table is also operable to rotate the carriage and the workpiece about an axis substantially parallel to the longitudinal axis. The fastener installation device may be translated along an axis substantially orthogonal to the longitudinal axis and rotated about an axis substantially orthogonal to the longitudinal axis. Additionally, a positioning system may automatically position the workpiece adjacent the fastener installation device and provide normalisation between the workpiece and the fastener installation device.

Preferred embodiments of the present invention are best understood by referring to the following description and drawings, wherein like numerals are used for like and corresponding parts of the various drawings.

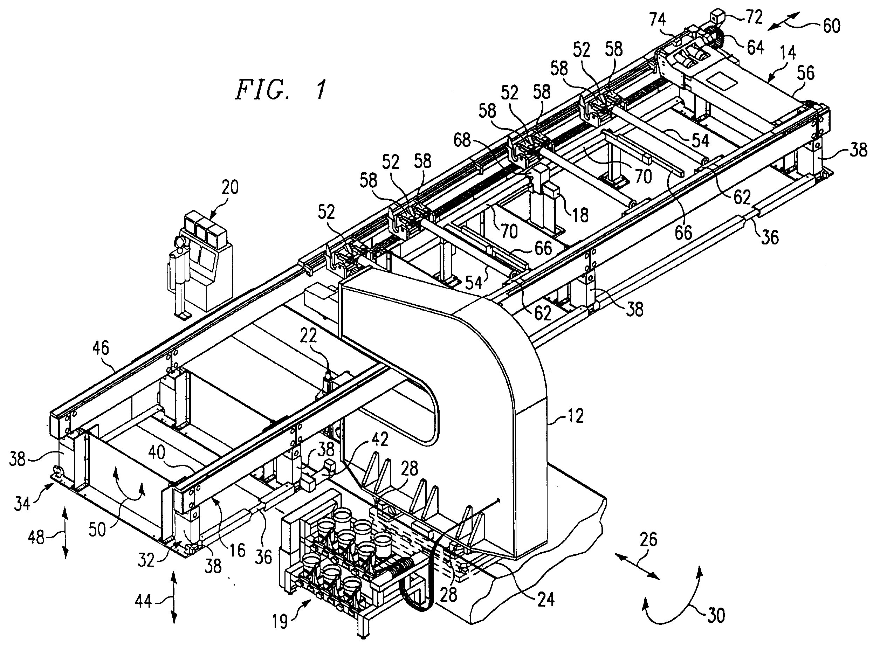

Figure 1 is a schematic diagram of a multi-axis fastening system 10 in accordance with an embodiment of the present invention. System 10 includes a fastener installation device 12, a carriage 14, a table 16, a loading system 18, a fastener delivery system 19, and a control system 20. In the embodiment illustrated in Figure 1, fastener installation device 12 includes a C-frame style device for installing a fastener in a workpiece. Fastener installation device 12 may provide both drilling and fastener installation capabilities. However, fastener installation device 12 may also be configured to perform other types of manufacturing processes on the workpiece.

Fastener installation device 12 includes a drill point 22 representing a location on a head of the fastener installation device in contact with a surface of the workpiece. Fastener installation device 12 is mounted on support structure 24. Fastener installation device 12 and support structure 24 are configured to move along a Y-axis 26 toward and away from the workpiece.

Support structure 24 also includes curved rails 28 for supporting and moving fastener installation device 12. Fastener installation device 12 may be rotated about a B-axis 30 on curved rails 28. For example, a motor (not explicitly shown) may be mounted on support structure 24 for rotating fastener installation device 12 along curved rails 28 about B-axis 30. For example, fastener installation device 12 may be configured to rotate + /-4° about B-axis 30 to obtain normalisation between the workpiece and fastener installation device 12.

Table 16 includes an inboard side 32 and an outboard side 34. In Figure 1, inboard side 32 is located in closer proximity to fastener device 12 than outboard side 34. Inboard side 32 of table 16 includes a plurality of shafts 36, a plurality of supports 38, and a guide 40. A motor 42, such as a DC servo motor, is coupled to shafts 36 for raising and lowering guide 40 along a Z-axis 44, which is substantially orthogonal to Y-axis 26. For example, shafts 36 may be coupled together using non-backlash couplings, and shafts 36 may be coupled to supports 38 using a jack screw configuration for raising or lowering guide 40 along Z-axis 44.

Outboard side 34 of table 16 also includes shafts 36, supports 38, and a guide 42. Substantially similar to inboard side 32, a motor (not explicitly shown) may be used to drive shafts 36 and supports 38 to raise and lower outboard side 34 along a W-axis 48, which is substantially orthogonal to Y-axis 26. Inboard side 32 and outboard side 34 may be electronically coupled together so that inboard side 32 and outboard side 34 may be raised or lowered independently or in tandem. For example, raising or lowering inboard side 32 independently from outboard side 34 results in table 16 rotating about an A-axis 50. W-axis and Z-axis 44 are substantially orthogonal to Y-axis 26. Thus, table 16 may be raised or lowered along W-axis 48 and Z-axis 44 for locating the workpiece adjacent fastener installation device 12 and to provide normalisation of the workpiece relative to fastener installation device 12.

Carriage 14 includes clamp units 52, supports 54, and a drive unit 56. Clamp units 52 are configured to secure the workpiece on table 16 during movement of the workpiece and installation of fasteners using fastener installation device 12. Supports 54 are configured to support the workpiece during movement of the workpiece and installation of fasteners. In the embodiment illustrated in Figure 1, supports 54 comprise telescoping rollers for supporting the workpiece and compensating for length fluctuations due to movement of table 16 along W-axis 48 and Z-axis 44. Clamp units 52 and supports 54 may be spaced to accommodate a variety of workpiece configurations. For example, clamp units 52 and supports 54 may be spaced apart to accommodate a variety of lengths of the workpiece.

Each clamp unit 52 includes a plurality of clamps 58 to secure the workpiece during fastener installation. Each clamp 58 is configured to accommodate varying thicknesses of the workpiece. Additionally, each clamp 58 is configured to independently move upwardly and downwardly along W-axis 48 to accommodate varying contours of the workpiece. Clamp units 52 and supports 54 are coupled to drive unit 56 for moving the workpiece along a longitudinal or X-axis 60, which is substantially orthogonal to Y-axis 26, W-axis 48, and Z-axis 44. For example, drive unit 66 includes a motor 62 for translating clamp units 52, supports 54, and the workpiece along X-axis 60. Carriage 14 also includes idler units 62 coupled to supports 54 and adapted to be received by guide 40. In operation, clamp units 52 and idler units 62 move along X-axis 60 in guides 46 and 40, respectively. A rack and pinion drive system or other type of suitable system for moving carriage 14 along X-axis 60 may be utilised. Carriage 14 may also include a conduit 64 for housing and protecting electrical connections of carriage 14 during movement.

Loading system 18 includes supports 66 for receiving and supporting the workpiece during loading of the workpiece onto carriage 14. Supports 66 are coupled to a motor 68 via shafts 70. In operation, motor 68 drives shafts 70 resulting in upward rotation of supports 66. Additionally, each clamp unit 52 is configured for rotational movement about X-axis 60. Thus, in operation, clamp units 52 and supports 66 are rotated upwardly to a near vertical orientation to receive the workpiece from a crane, hoist, or other delivery system. The workpiece is lowered into clamps 58 of clamp unit 52 and secured. Additionally, supports 66 provide support to the workpiece while in the vertical orientation. After the workpiece has been secured by clamps 58, clamp units 52 and supports 66 are rotated downwardly toward table 16. As clamp units 52 and supports 66 are rotated downwardly, the workpiece approaches and becomes supported by supports 54. Supports 66 of loading system 18 continue rotating downwardly until supports 66 return to a starting position or are otherwise clear from longitudinal movement of carriage 14. Clamp units 52 and motor 68 may be electronically coupled for controlling the rotation of clamp units 52 and supports 66.

System 10 also includes a sensor 72 to provide longitudinal position information of the workpiece along X-axis 60. For example, sensor 72 may include a laser inferometer to transmit a laser signal to a target 74 positioned on carriage 14. However, sensor 72 may include other suitable measurement devices or methods to provide longitudinal position information of the workpiece. Thus, as carriage 14 moves longitudinally along X-axis 60, sensor 72 determines the longitudinal position of the workpiece relative to fastener installation device 12. Sensor 72 may also be used to move carriage 14 along X-axis 60 incremental amounts required to maintain spacing requirements between fasteners installed in the workpiece.

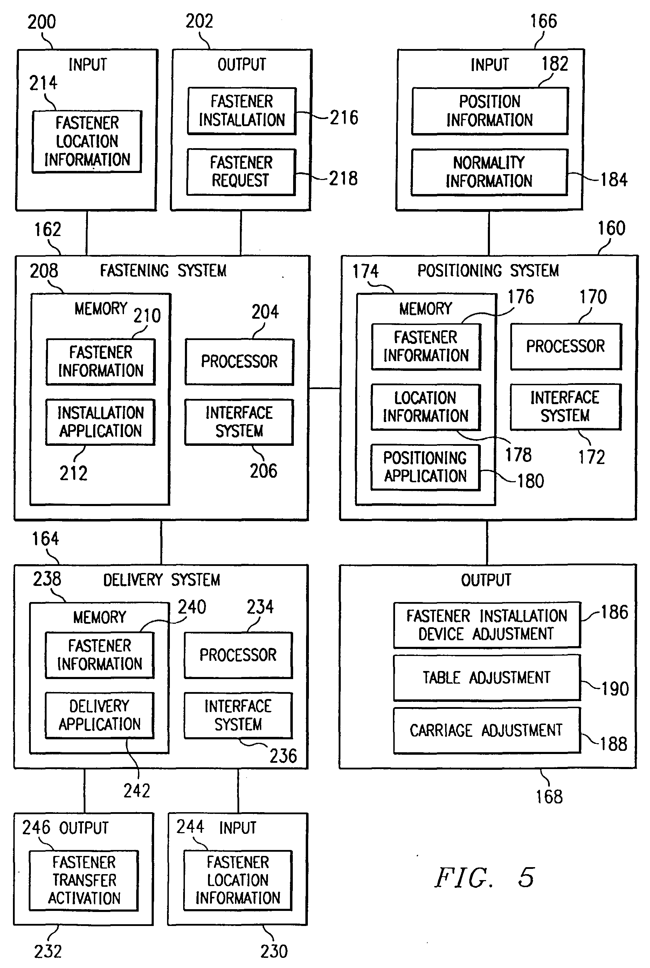

Delivery system 19 provides automatic delivery of fasteners to fastener installation device 12. For example, delivery system 19 may include storage and transport devices for transferring various types and sizes of fasteners to fastener installation device 12 to meet workpiece fastener requirements. Control system 20 is described in greater detail in conjunction with Figures 5.

In operation, the workpiece is secured to carriage 14 and is transported along X-axis 60 on table 16. Table 16 may be raised or lowered about W-axis 48 and Z-axis 44. Fastener installation device 12 may moved along Y-axis 26 and rotated about B-axis 30. Thus, the workpiece, having a generally lighter weight than fastener installation device 12, table 16, and carriage 14, experiences a majority of movement compared to fastener installation device 12, table 16, and carriage 14. Therefore, system 10 provides greater efficiency than prior systems by decreasing the amount of movement experienced by heavier components of system 10.

Additionally, system 10 provides greater reliability than prior systems. For example, system 10 provides greater precision than prior systems by decreasing the amount of movement of heavier components of system 10. Thus, the workpiece, having a generally lighter weight than fastener installation device 12, table 16, and carriage 14, may be positioned with increased accuracy relative to fastener installation device 12. Additionally, decreased movement of fastener installation device 12 relative to the workpiece provides greater accuracy of fastener locating in the workpiece.

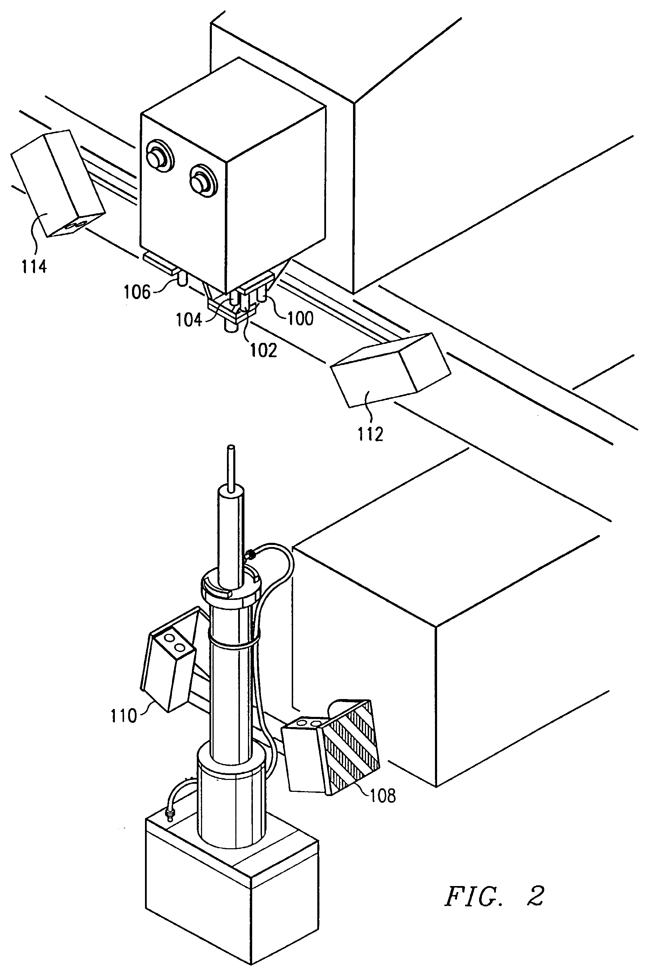

Figure 2 is a schematic diagram of a portion of multi-axis fastening system 10 in accordance with an embodiment of the present invention. In this embodiment, system 10 includes sensors 100, 102, 104, and 106 to provide normalisation between the workpiece and fastener installation device 12. For example, sensors 100, 102, 104, and 106 may include proximity sensors to determine a distance between each sensor 100, 102, 104, and 106 and the workpiece. The distance determined by sensors 100, 102, 104, and 106 may be correlated to the location of drill point 22 relative to the workpiece.

In operation, sensors 100 and 102 are used to determine normality of the workpiece relative to Y-axis 26. Sensors 104 and 106 are used to determine normality of the workpiece relative to X-axis 60. In response to measurements from sensors 100 and 102, table 16 may be raised or lowered along W-axis 48 and/or X-axis 44 to normalise the workpiece relative to Y-axis 26. In response to measurements from sensors 104 and 106, fastener installation device 12 may be rotated about B-axis 30 for normalisation between the workpiece and fastener installation device 12 relative to X-axis 60. Thus, system 10 provides automatic normalisation between the workpiece and fastener installation device 12, thereby decreasing processing time for drilling and installing fasteners in the workpiece.

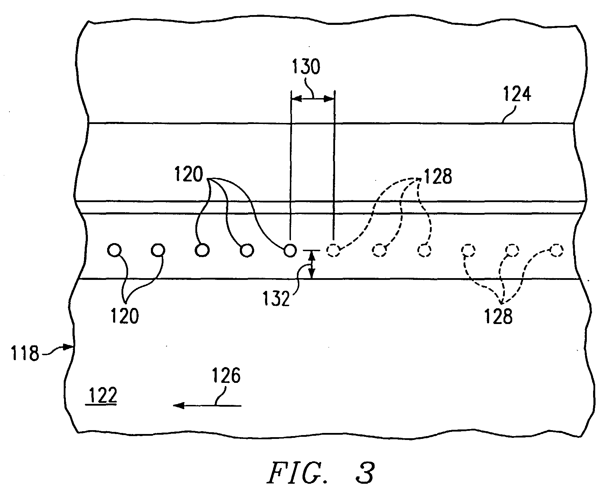

In the embodiment illustrated in Figure 2, system 10 also includes sensors 108, 110, 112, and 114 to maintain fastener edge distance and spacing requirements. For example, sensors 108, 110, 112, and 114 may include optical sensors, such as Cognix vision system sensors, for determining a distance from an edge of the workpiece to a site of a required fastener location. In operation, as the workpiece moves adjacent fastener installation device 12 in the direction indicated by arrow 116, sensors 110 and 114 may be used to maintain a predetermined edge distance for the next fastener to be installed in the workpiece. Sensors 108 and 112 may be used in a similar manner for movement of the workpiece in a direction opposite that indicated by arrow 116. The operation of sensors 108, 110, 112, and 114 is described in further detail in conjunction with Figure 3.

Figure 3 is a schematic diagram of a workpiece 118 receiving fasteners 120 from fastener installation device 12. In this example, workpiece 118 includes a web 122 and a stiffener 124 being attached to web 122. In this example, workpiece 118 is moving adjacent fastener installation device 12 in a direction indicated by arrow 126. Locations 128 represent sites along workpiece 118 to receive fasteners 120 as workpiece 118 moves adjacent fastener installation device 12 in direction 126.

Design requirements for the processing of workpiece 118 may include maintaining a particular spacing or pitch distance 130 between fasteners and a particular edge distance 132 to an edge of workpiece 118 for each fastener 120. In operation, sensors 108, 110, 112, and 114 "look ahead" to determine location 128 for the next fastener 120 to maintain required spacing and edge distance requirements. As workpiece 118 moves in direction 126 for installation of the next fastener 120, fastener installation device 12 is moved along Y-axis 26 to install the next fastener 120 at location 128 to maintain the required edge distance 132. Additionally, after determining location 128 of the next fastener 120, carriage 14 moves workpiece 118 along direction 126 the required distance to maintain the required pitch distance 130. Thus, system 10 automatically maintains required spacing between fasteners 120 and required spacing from an edge of workpiece 110.

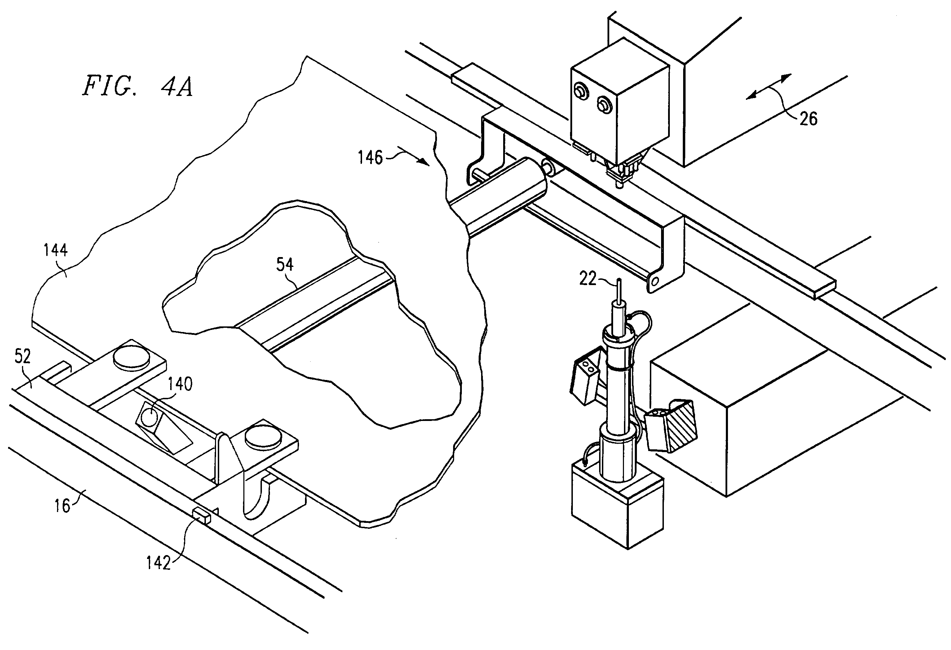

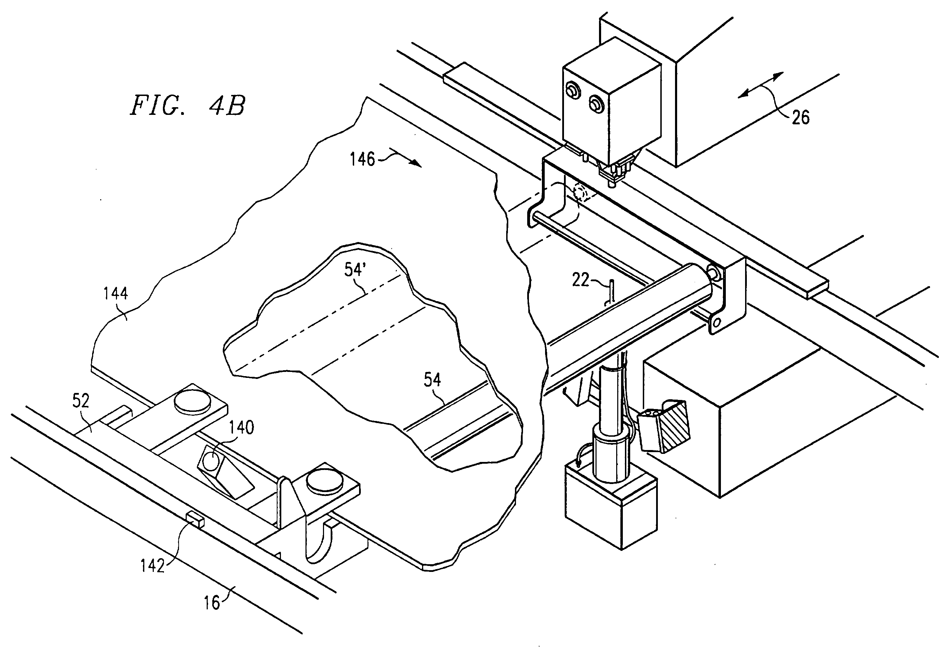

Figure 4A is a schematic diagram of a portion of multi-axis fastening system 10 in accordance with an embodiment of the present invention. In this example, carriage 14 includes a sensor 140 for determining a location of support 54 relative to drill point 22 of fastener installation device 12. For example, a sensor pad 142 may be located on table 116 aligned with drill point 22 along Y-axis 26. As a workpiece 144 moves along table 116 in the direction indicated by arrow 146, sensor 140 approaches sensor pad 142. Sensor 140 may be located on clamp unit 52 a predetermined distance from support 54 so that sensor 140 detects sensor pad 142 when support 54 is located a predetermined distance from drill point 22. As support 54 approaches drill point 22, sensor 140 detects sensor pad 142 and causes a motor (not explicitly shown) to move support 54 from a first position supporting workpiece 144 to a second position supporting workpiece 144, as further described and illustrated in conjunction with Figure 4B.

Figure 4B is a schematic diagram of the portion of system 10 illustrated in Figure 4A after movement of support 54 from a first position to a second position relative to workpiece 144. As illustrated in Figure 4B, support 54 is translated from a first position, represented as 54', to a second position supporting workpiece 144. Support 54 is transferred from one side of drill point 22 to an opposite side of drill point 22 between a fastener installation sequence performed by fastener installation device 12. For example, support 54 may be rolled beneath workpiece 144 from location 54' to the location illustrated in Figure 4B so that processing of workpiece 144 may continue without interference from support 54 as workpiece 144 travels along direction 146. Thus, system 10 provides greater efficiency than prior systems by automatically adjusting workpiece support so that processing of the workpiece may continue substantially uninterrupted.

Figure 5 is a block diagram of control system 20 for multi-axis fastening system 10 in accordance with an embodiment of the present invention. System 20 includes a positioning system 160, a fastening system 162, and a delivery system 164. Positioning system 160 may comprise input 166, output 168, a processor 170, an interface system 172, and memory 174. Input 166 may include information input from a pointing device such as a mouse, a track pad, a keyboard, and the like. Input 166 may also include input received directly from various components of system 10. Output 168 may include information output to a monitor, a printer, and the like. Output 168 may also include output directly to various components of system 10. Interface system 172 may connect positioning system 160 and other input and output devices to fastening system 162 and delivery system 164.

Memory 174 includes computer software that may be executed by processor 170. A computer software may generally be identified by modules, engines, applications and similar systems in memory 174. It will be understood that the computer software may be otherwise combined and/or divided for processing within the scope of the present invention. Accordingly, labels of the applications and other software systems are for illustrative purposes and may be varied and still remain within the scope of the present invention. The computer software may be loaded into memory 174 from disk storage (not explicitly shown). Disk storage may include a variety of types of storage media. For example, disk storage may include floppy disk drives, hard disk drives, CD-ROM drives, or magnetic tape drives.

Memory 174 may include computer records that may be generally identified by tables. It will be understood that the computer records may be otherwise combined and/or divided within the scope of the present invention. Accordingly, labels of the tables are for illustrative purposes and may be varied while remaining within the scope of the present invention.

In the embodiment illustrated in Figure 5, memory 174 includes a fastener information table 176 and a location information table 178. Fastener information table 176 may include information pertaining to the fasteners being installed into the workpiece. For example, fastener information table 176 may include fastener information such as fastener types, fastener sizes, fastener grip lengths, and the like, in accordance with the workpiece fastener requirements. Location information table 178 may include location information pertaining to the fasteners being installed into the workpiece. For example, location information table 178 may include a two-dimensional or three-dimensional graphical representation of each fastener location for the workpiece. Additionally, location information table 178 may include pitch distance and edge distance requirements for each type or size of fastener to be installed in the workpiece.

Positioning system 160 includes a positioning application 180, which is a computer software program. In Figure 5, positioning application 180 is illustrated as being stored in memory 174, where it can be executed by processor 170. Positioning application 180 may also be stored on a variety of other types of storage media.

Output 168 of positioning system 160 may include fastener installation device adjustment 186, table adjustment 190, and carriage adjustment 188. For example, positioning application 180 automatically adjusts fastener installation device 12, carriage 14, and table 16 to provide normalisation between the workpiece and fastener installation device 12. Positioning application 180 also automatically adjusts fastener installation device 12, carriage 14, and table 16 to provide fastener placement in accordance with the workpiece requirements.

In operation, positioning application 180 receives information from various components of system 10. For example, input 166 to positioning application 180 may include position information 182 and normality information 184. Position information 182 may include information received from sensors 108, 110, 112, and 114. In response to information received from sensors 108, 110, 112, and 114, positioning application 180 controls movement of fastener installation device 12 along Y-axis 26 to maintain a required edge distance on a fastener to be installed into the workpiece. Positioning application 180 may also correlate position information 182 with fastener information contained in fastener information table 176 and location information table 178 to maintain a required edge distance on a fastener to be installed into the workpiece.

Additionally, positioning application 180 controls the movement of carriage 14 along X-axis 60 to provide a required pitch distance between adjacent fasteners installed into the workpiece. For example, position information 182 may include information received from sensor 72. In response to information received from sensor 72, positioning application 180 controls movement of carriage 14 along X-axis 60 to maintain a required spacing between fasteners to be installed into the workpiece. Positioning application 180 may also access information contained in fastener information table 176 and location information table 178 to move carriage 14 along X-axis 60 a required amount.

Normality information 184 may include information received from sensors 100, 102, 104, and 106. In response to information received from sensors 100, 102, 104, and 106, positioning application 180 controls movement of fastener installation device 12 about B-axis 30 to provide normalisation between the workpiece and fastener installation device 12. Additionally, positioning application 180 controls movement of table 116 along W-axis 48 and Z-axis 44 to obtain normalisation between the workpiece and fastener installation device 12.

Fastening system 162 includes input 200, output 202, a processor 204, an interface system 206, and a memory 208. Input 200 may be received from an input device such as a mouse, a track pad, a keyboard, and the like. Input 200 may also include information received from various components of system 10. Output 202 may include information output to a monitor, a printer, and the like. Output 202 may also include information output directly to components of system 10. Interface system 206 may connect fastening system 162 and other input and output devices of system 10 to positioning system 160 and delivery system 164.

Memory 208 includes computer software that may be executed by processor 204. The computer software may be loaded into memory 208 from disk storage (not explicitly shown). Disk storage may include a variety of types of storage media. For example, disk storage may include floppy disk drives, hard disk drives, CD-ROM drives, or magnetic tape drives.

Memory 208 may include computer records that may be generally identified by tables. It will be understood that the computer records may be otherwise combined and/or divided within the scope of the present invention. Accordingly, labels of the tables are for illustrative purposes and may be varied while remaining within the scope of the present invention.

Memory 208 may include a fastener information table 210. Fastener information table 210 may include information pertaining to the fasteners to be installed in the workpiece. For example, fastener information table 210 may include the locations, types, sizes, grip lengths, and the like, of fasteners required to meet workpiece fastener installation requirements. Fastener information table 210 may also include drilling information, such as hole sizes, for the types and sizes of fasteners to be installed into the workpiece.

Fastening system 162 includes an installation application 212, which is a computer software program. In Figure 5, installation application 212 is illustrated as being stored in memory 208, where it can be executed by processor 204. Installation application 212 automatically determines and installs the type of fastener required to meet workpiece fastener installation requirements.

In operation, installation application 212 receives input 200 for preparing and installing a particular fastener in the workpiece. Input 200 may include fastener information 214. Fastener information 214 may include information pertaining to a particular location on the workpiece to receive a fastener. Fastener information 214 may also include information pertaining to the type and size of fastener to be installed in the workpiece.

Output 202 of installation application 212 may include fastener installation 216. For example, fastener installation 216 may include the fastener installation process, such as drilling and installing a fastener into the workpiece. Additionally, installation application 212 may also generate a fastener request 218. Fastener request 218 may be used to notify delivery system 164 of a particular type and size of fastener required to complete the fastener installation sequence.

Delivery system 164 includes input 230, output 232, a processor 234, an interface system 236, and a memory 238. Input 230 may include information received from a pointing device such as a mouse, a track pad, a keyboard, and the like. Input 230 may also include information received from various components of system 10. Output 232 may be information output to a monitor, a printer, and the like. Additionally, output 232 may also include information output directly to various components of system 10. Interface system 236 may connect delivery system 164 and other input and output devices to fastening system 162 and positioning system 160.

Memory 238 includes computer software that may be executed by processor 234. Memory 238 may also include computer records that may be generally identified by tables. It will be understood that the computer records may be otherwise combined and/or divided within the scope of the present invention. Accordingly, labels of the tables are for illustrative purposes and may be varied while remaining within the scope of the present invention.

Memory 238 may include a fastener information table 240. Fastener information table 240 may include information pertaining to the types and sizes of fasteners available for transporting to fastener installation device 12. Delivery system 164 also includes a delivery application 242, which is a computer software program. In Figure 5, delivery application 242 is illustrated as being stored in memory 238, where it can be executed by processor 234. Delivery application 242 may also be stored on a variety of other types of storage media. Delivery application 242 automatically transports a particular size or type of fastener to fastener installation device 12 to meet the workpiece fastener installation requirements.

In operation, delivery application 242 may receive input 230. Input 230 may include fastener request 218 from fastening system 162. Output 232 of delivery application 242 may include fastener transfer activation 246. Fastener transfer activation 246 may include the transfer of a particular type and size of fastener to fastener installation device 12.

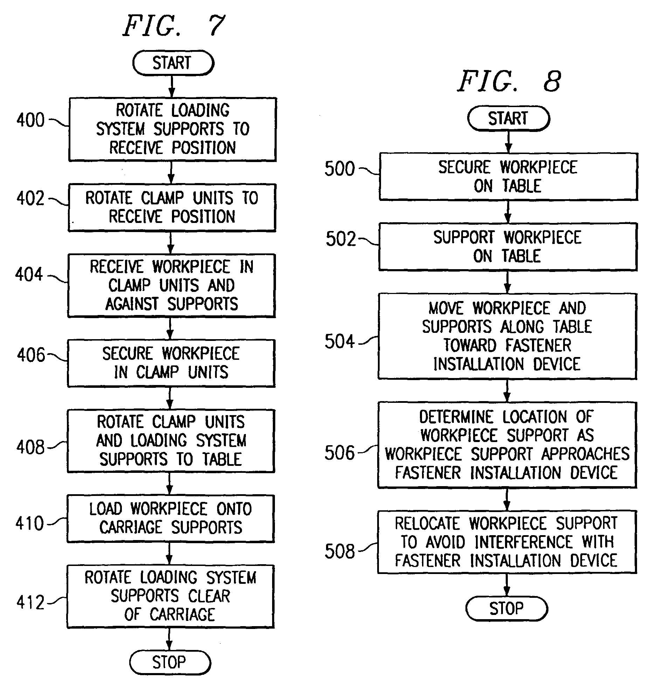

Figure 7 is a method for multi-axis fastening in accordance with an embodiment of the present invention. The method begins at step 300 where a workpiece is loaded and secured onto table 16. For example, the workpiece may be received and lowered onto table 16 using loading system 18. Additionally, supports 54 and clamp Units 52 may be used to support and secure, respectively, the workpiece on table 16.

At step 302, the orientation and/or axes of the workpiece as secured on table 16 are correlated to the workpiece design axes and orientation. For example, design axes and design fastener locations for the workpiece may be contained in location information table 178. However, the workpiece may be secured to table 16 at an orientation misaligned with axes of system 10. Sensor 72 and sensors 108, 110, 112, and 114 may be used to locate points on a surface of the workpiece so that the orientation of the workpiece may be correlated to the design fastener locations for the workpiece.

At step 304, system 10 determines a location to install a fastener in the workpiece. For example, sensor 72 and sensors 108, 110, 112, and 114 may be used to determine a location of a fastener to be installed in the workpiece. Additionally, positioning system 160 may correlate information received from sensor 72 and sensors 108, 110, 112, and 114 with information contained in location information table 178 for locating a position to install a fastener.

At step 306, carriage 14 is adjusted or moved along X-axis 60 to position the fastener location determined at step 304 beneath drill point 22 of fastener installation device 12. At step 308, fastener installation device 12 is adjusted or moved along Y-axis 26 to maintain an edge distance requirement for the fastener location determined at step 304.

At step 310, normalisation information is received from sensors 100, 102, 104, and 106. In response to information received from sensors 100, 102, 104, and 106, table 16 is adjusted to obtain normalisation between the workpiece and fastener installation device 12 at step 312. For example, table 16 may be moved upwardly or downwardly along W-axis 48 and Z-axis 44 to obtain normalisation along Y-axis 26.

Additionally, fastener installation device 12 may be rotated about B-axis 30 to obtain normalisation along X-axis 60.

At step 316, fastener installation device 12 installs a fastener at the location determined at step 304. At step 318, system 10 determines whether another fastener is required in the workpiece. If another fastener is required, the method returns to step 304 where the next fastener location is determined. If another fastener is not required in the workpiece, the method terminates.

Figure 7 is a method for loading a workpiece into a multi-axis fastening system in accordance with an embodiment of the present invention. The method begins at step 400 where loading supports 66 are rotated upwardly to a position to receive the workpiece from a crane, hoist, or other transportation device. At step 402, clamp units 52 are rotated upwardly about X-axis 60 to a position to receive the workpiece from the crane, hoist, or other transportation device. At step 404, the workpiece is delivered into clamps 58 of clamp units 52. Additionally, the workpiece may be supported in a near-vertical position using supports 66.

At step 406, the workpiece is secured using clamps 58. At step 408, clamp units 52 and supports 66 are rotated downwardly toward table 16. Clamp units 52 and supports 66 continue rotating downwardly until the workpiece is supported using supports 54 of carriage 14 at step 410. At step 412, supports 66 continue rotating downwardly until clear of longitudinal movement of carriage 14.

Figure 8 is a method for automatic workpiece support positioning for a multi-axis fastening system in accordance with the present invention. The method begins at step 500 where the workpiece is secured onto table 16. The workpiece is also supported on table 16 using supports 54 at step 502. At step 504, carriage 14 moves along X-axis 60 toward fastener installation device 12. Thus, the workpiece and supports 54 also move along X-axis 60 toward fastener installation device 12.

At step 506, the location of support 54 is determined relative to fastener installation device 12 as support 54 moves along X-axis 60. For example, sensor 140 may be used to determine the location of support 54 relative to drill point 22 of fastener installation device 12. As support 54 approaches fastener installation device 12, support 54 is automatically moved from a first supporting position beneath the workpiece to a second supporting position beneath the workpiece clear of interference with fastener installation device 12 at step 508.

Although the present invention and its advantages have been described in detail, it should be understood that various changes, substitutions, and alterations can be made therein without departing from the spirit and scope of the present invention as defined by the appended claims.

## Claims

1. A multi-axis fastening system (10) for installing a fastener in a workpiece comprising: a fastener installation device (12) movable along a first axis (26) and operable to install the fastener in the workpiece; a table (16) having a longitudinal axis (60) substantially orthogonal to the first axis (26) and operable to move along a second axis (44, 48) substantially orthogonal to the first and longitudinal axes; and a carriage (14) mounted on the table and operable to support and move the workpiece along the longitudinal axis.

2. The system of claim 1, wherein the fastener installation device is further operable to rotate (30) about the first axis.

3. The system of claim 1 or claim 2, further comprising a processor (20) operable to control movement of the fastener installation device along the first axis to install the fastener at a predetermined location in the workpiece.

4. The system of any of the preceding claims, wherein the table is further operable to rotate about the longitudinal axis.

5. The system of claim 4, further comprising a processor operable to control rotation of the table about the longitudinal axis to normalise the workpiece relative to the fastener installation device.

6. The system of any of the preceding claims, further comprising at least one sensor (100, 102, 104, 106) operable to determine normality of the workpiece relative to the fastener installation device.

7. The system of claim 6, wherein the sensor comprises at least one proximity sensor.

8. The system of any of the preceding claims, further comprising at least one sensor (108, 110, 112, 114) operable to determine a distance from an edge of the workpiece to locate a site for the fastener.

9. The system of claim 8, wherein the sensor comprises an optical sensor.

10. The system of any of the preceding claims, further comprising a fastener delivery system (19) operable to transfer the fastener from a storage device to the fastener installation device.

11. The system of any of the preceding claims, wherein the table comprises: a support operable to support a first location of the workpiece; a sensor operable to determine a location of the support relative to the fastener installation device; and a processor operable to receive a signal from the sensor and automatically move the support to support a second location of the workpiece.

12. The system of any of the preceding claims, further comprising a workpiece loading system operable to load the workpiece onto the carriage.

13. The system of claim 12, wherein the workpiece loading system comprises at least one support operable to rotate upwardly to receive the workpiece and rotate downwardly to load the workpiece onto the carriage.

14. The system of any of the preceding claims, wherein the carriage comprises: at least one support operable to support the workpiece; at least one clamp operable to secure the workpiece; and a drive unit coupled to the support and the clamp, the drive unit operable to move the support, the clamp and the workpiece along the longitudinal axis.

15. A method for installing a fastener in a workpiece comprising: providing a fastener installation device movable along a first axis; providing a table having a longitudinal axis substantially orthogonal to the first axis; moving the table in a vertical axis substantially orthogonal to the first and longitudinal axes; locating the workpiece on a carriage; and moving the carriage on the table along the longitudinal axis.

16. The method of claim 15, further comprising rotating the fastener installation device about the first axis.

17. The method of claim 15 or claim 16, further comprising rotating the table about the longitudinal axis.

18. The method of any one of claims 15 to 17, further comprising automatically determining a distance from an edge of the workpiece to locate a site for the fastener.

19. The method of any one of claims 15 to 18, further comprising automatically determining normality of the workpiece relative to the fastener installation device.

20. The method of any one of claims 15 to 19, wherein providing a table comprises: providing a support operable to support the workpiece at a first location; providing a sensor operable to determine a location of the workpiece relative to the fastener installation device; and wherein the method further comprises receiving a signal from the sensor and automatically moving the support to support the workpiece at a second location of the workpiece.

21. The method of any one of claims 15 to 20, further comprising automatically transporting the fastener from a storage device to the fastener installation device.

22. A multi-axis fastening system for installing a fastener in a workpiece comprising: a fastener installation device; a carriage operable to position the workpiece adjacent the fastener installation device; a table operable to support the carriage and position the workpiece adjacent the fastener installation device; a control system operable to control movement of the table, the carriage, and the fastener installation device; and wherein the fastener installation device, the carriage, the table, or the workpiece having a least amount of weight experiences a majority of the movement.

23. The system of claim 22, wherein the control system is further operable to control movement of the fastener installation device to maintain a predetermined distance to an edge of the workpiece for the fastener.

24. The system of claim 22 or 23, wherein the control system is further operable to control movement of the fastener installation device and the table to normalise the workpiece relative to the fastener installation device.

25. The system of claim 22, 23 or 24 wherein the carriage comprises: a support operable to support a first location of the workpiece; a sensor operable to determine a distance from the support to the fastener installation device; and wherein the control system is further operable to receive a signal from the sensor and move the support to a second location of the workpiece.

26. A carriage for transporting a workpiece along a longitudinal axis adjacent a fastener installation device comprising: a support to support the workpiece; a clamp unit operable to secure the workpiece adjacent the support; and a drive unit coupled to the support and the clamp unit, the drive unit operable to move the support, the clamp unit and the workpiece along the longitudinal axis.

27. The carriage of claim 26, wherein the clamp unit is further operable to rotate about the longitudinal axis to receive the workpiece.

28. The carriage of claim 26 or claim 27, wherein the clamp unit comprises a plurality of clamps, each clamp operable to move independently along an axis substantially orthogonal to the longitudinal axis.

29. The carriage of claim 26, 27 or 28, further comprising: a sensor operable to determine a distance from the support to the fastener installation device; and a processor operable to receive a signal from the sensor and move the support to another location on the workpiece away from the fastener installation device.

30. The carriage of any one of claims 26 to 29, wherein the support comprises a roller operable to translate from a first location of the workpiece to a second location of the workpiece while supporting the workpiece.

31. A loading system for loading a workpiece in a fastener installation system comprising: a support operable to receive the workpiece; a drive unit operable to rotate the support from a first position to a second position to receive the workpiece; and a clamp unit operable to secure the workpiece in the second position.

32. The system of claim 31, wherein the clamp unit is further operable to rotate about a longitudinal axis from a third position to a fourth position to receive and secure the workpiece.

33. The system of claim 32, wherein the clamp unit comprises a plurality of clamps, each clamp operable to independently move along an axis substantially orthogonal to the longitudinal axis.

34. The system of any one of claims 31 to 33, wherein the drive unit is further operable to rotate the support from the second position to the first position to deliver the workpiece to a table.
